# EUROPÄISCHE PATENTSCHRIFT

(11) **EP 2 896 530 B1**
(45) Veröffentlichungstag und Bekanntmachung des Hinweises auf die Patenterteilung: **19.09.2018**
(21) Anmeldenummer: 14198047.4
(22) Anmeldetag: 15.12.2014
(51) Int. Cl.: B60K 37/02, B60K 35/00, G01C 21/36, G01D 7/02, B60L 3/00, B60L 3/12

(54) **Anzeigevorrichtung für ein Kraftfahrzeug mit elektrischem Fahrantrieb**
Display device for a motor vehicle with electric propulsion
Dispositif d'affichage pour un véhicule automobile à entraînement électrique

(30) Priorität: 14.01.2014 DE 102014200549
(43) Veröffentlichungstag der Anmeldung: 22.07.2015
(73) Patentinhaber: Volkswagen Aktiengesellschaft, 38440 Wolfsburg (DE)
(72) Erfinder: Breuel, Matthias, 68163 Mannheim (DE); Dr. Neumann, Markus, 38533 Vordorf (DE)

(56) Entgegenhaltungen:
- EP-A1- 1 207 072
- WO-A1-2012/114425
- DE-A1-102010 010 443
- DE-A1-102012 000 584
- DE-C1- 19 533 829

## Beschreibung

Die Erfindung betrifft eine Anzeigevorrichtung für ein Kraftfahrzeug. Die Anzeigevorrichtung kann beispielsweise als Kombiinstrument ausgestaltet sein. Sie ist dazu ausgelegt anzuzeigen, wie viel Antriebsleistung ein elektrischer Fahrantrieb des Kraftfahrzeugs momentan bereitstellt und wie viel Zeit noch verbleibt, bevor eine Leistungsbegrenzung des Fahrantriebs die maximal vom Fahrer abrufbare Antriebsleistung auf eine Leistungsgrenze kleiner als die Maximalleistung des Fahrantriebs begrenzt. Grund für die Begrenzung kann eine sich bei dauerhaftem Abrufen der Maximalleistung ergebende Erhitzung des Fahrantriebs sein. Andere betriebsbedingte Begrenzungen können auch abhängig von Zuständen anderer Fahrzeugkomponenten, wie z.B. einer Traktionsbatterie, verursacht werden.
Eine Anzeigevorrichtung der genannten Art ist beispielsweise aus der DE 10 2012 000 584 A1 bekannt. Die darin beschriebene Anzeigevorrichtung ist für ein Hybridfahrzeug vorgesehen und weist einen Bereich auf, in welchem eine verbleibende Zeit anzeigbar ist, innerhalb welcher der Elektromotor des Hybridfahrzeugs in einem Boostbetrieb betrieben werden kann. Hierdurch kann ein Fahrer des Hybridfahrzeugs beispielsweise einen Überholvorgang besser planen.
Aus der DE 195 33 829 C1 ist eine Vorrichtung zum Überwachen einer Antriebsleistung eines Fahrzeugs mit einem Elektro- oder Hybridantrieb bekannt, die ein Anzeigeinstrument mit einem Zeiger aufweist, wobei der Zeiger eine analoge Skala für einen momentan abgegebene Antriebsleistung überstreicht und in Abhängigkeit der elektrischen Antriebsleistung gesteuert wird.
Die DE 10 2010 010 443 A1 beschreibt eine Anzeigevorrichtung, über die ein Betriebsmodus eines Hybridfahrzeugs anzeigbar ist.
In einem Kraftfahrzeug mit elektrischem Fahrantrieb, also beispielsweise mit einem oder mehreren Elektromotoren, kann die Besonderheit bestehen, dass die Antriebsleistung je nach Auslegung des Fahrzeugs und des Elektromotors nicht immer über das volle Leistungsspektrum von 0 Prozent bis 100 Prozent zur Verfügung steht, das heißt vom Fahrer beispielsweise durch Betätigen des Gaspedals abgerufen werden kann. Des Weiteren kann auch die volle Antriebsleistung von 100 Prozent, also die Maximalleistung, wie bereits aus der obigen Druckschrift bekannt nur über einen bestimmten Zeitraum abgerufen werden. Danach wird das Leistungsspektrum auf eine Leistungsgrenze begrenzt. In der genannten Druckschrift wird der elektrische Fahrantrieb vollständig deaktiviert. Die Leistungsgrenze kann aber auch variabel sein, das heißt je nach Betriebszustand des Elektromotors auch beispielsweise auf einen Wert zwischen 0 Prozent und 100 Prozent der Maximalleistung eingestellt werden.

Dem Fahrer sollte deshalb über eine Anzeigevorrichtung der momentan verfügbare Leistungsbereich der abrufbaren Antriebsleistung angezeigt werden. Eine solche Leistungsanzeigevorrichtung wird auch als Powermeter bezeichnet. Gibt der Fahrer Vollgas und ruft hierdurch die Maximalleistung ab, das heißt der elektrische Fahrantrieb stellt die Maximalleistung bereit, so kann er dies nur mit einer maximalen Zeitdauer tun. Danach wird die Antriebsleistung des Fahrantriebs auf die beschriebene Leistungsgrenze mittels einer Leistungsbegrenzung reduziert, und zwar so lange, bis beispielsweise der Elektromotor wieder ausreichend abgekühlt ist. Dem Fahrer muss also bei Abrufen der Maximalleistung nach Möglichkeit auch veranschaulicht werden, wie lange er noch die Maximalleistung abrufen kann. Schließlich muss dem Fahrer während der Leistungsbegrenzung jederzeit klar sein, wo sich die Leistungsgrenze gerade befindet, um entsprechend Fahrmanöver planen zu können.

Der Erfindung liegt die Aufgabe zugrunde, die drei Anzeigen für Powermeter, verbleibende Zeit für den Abruf der Maximalleistung und aktueller Wert der Leistungsgrenze räumlich kompakt in einer Anzeigevorrichtung bereitzustellen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Die erfindungsgemäß bereitgestellte Anzeigevorrichtung ist für ein Kraftfahrzeug ausgelegt, das einen elektrischen Fahrantrieb aufweist, bei welchem eine Leistungsbegrenzung die Antriebsleistung des Fahrantriebs auf eine Leistungsgrenze kleiner als eine vorbestimmte Maximalleistung frühestens dann begrenzt, nachdem der Fahrantrieb die Maximalleistung für eine Restzeitdauer bereitgestellt hat, die kleiner als eine vorbestimmte maximale Zeitdauer oder gleich der maximalen Zeitdauer ist. Dem Fahrer wird also zumindest die Restzeitdauer zum Abrufen der Maximalleistung "garantiert", so dass er z.B. ein Überholmanöver planen kann. Nach Ablauf der Restzeitdauer kann dann überprüft werden, ob eine Leistungsbegrenzung nötig ist. Die Leistungsbegrenzung kann in an sich bekannter Weise durch z.B. eine Erhitzung des Elektromotors auf eine Betriebstemperatur oberhalb eines Schwellenwertes und/oder durch Rahmenbedingungen anderer Fahrzeugkomponenten, z.B. eine Traktionsbatterie, veranlasst oder ausgelöst werden.

Die Leistungsbegrenzung muss also nicht zwangsweise nach Ablauf der Restzeitdauer sofort einsetzen. Der Fahrer muss aber damit rechnen.

Die erfindungsgemäße Anzeigevorrichtung weist hierbei in der bekannten Weise ein Powermeter auf, das heißt, eine Leistungsanzeigevorrichtung mit einem Zeigerelement zum Anzeigen einer momentan von dem Fahrantrieb bereitgestellten Antriebsleistung auf einem Leistungsskalenfeld. Das Leistungsskalenfeld kann hierbei beispielsweise Zahlen umfassen, beispielsweise 0 Prozent bis 100 Prozent, oder aber auch einfach einen segmentierten oder geschlossenflächig dargestellten Bargraphen. Das Zeigerelement kann beispielsweise ein mechanischer Zeiger wie bei einer Analoguhr sein oder bei einem Bargraph kann eine Teilfläche illuminiert sein, so dass die Grenze des leuchtenden Bereichs auf der Leistungsskala den Wert der momentan bereitgestellten Antriebsleistung anzeigt.

Bei der Anzeigevorrichtung ist zusätzlich die beschriebene Zeitanzeigevorrichtung mit einem Zeitanzeiger zum Darstellen der Restzeitdauer durch Anzeigen eines bereits verstrichenen Anteils der maximalen Zeitdauer auf einem Zeitskalenfeld vorgesehen. Auch das Zeitskalenfeld kann beispielsweise Zahlen aufweisen, beispielsweise für einen Countdown, oder auch einfach einen segmentierten oder geschlossenflächigen Bargraphen. Der Zeitanzeiger kann entsprechend durch Illuminieren desjenigen Anteils des Bargraphen realisiert sein, welcher die bereits verstrichene Zeit als Anteil der maximalen Zeitdauer darstellt.

Um nun eine kompakte Darstellungsweise zu erhalten, sind das Leistungsskalenfeld mit beispielsweise der Angabe 0 Prozent bis 100 Prozent der Maximalleistung und das Zeitskalenfeld unmittelbar aneinander angrenzend angeordnet, und zwar in der Weise, dass die beiden Skalenenden übereinstimmen. Mit anderen Worten ist also bei dem Leistungsskalenfeld das Leistungsskalenende, welches die Maximalleistung repräsentiert, also 100 Prozent, an der gleichen Stelle angeordnet, wo bei dem Zeitskalenfeld der Zeitanzeiger steht, wenn die maximale Zeitdauer verstrichen ist, also keine Restzeit mehr übrig bleibt und mit anderen Worten die Leistungsbegrenzung einsetzt. Gibt der Fahrer also Vollgas, so steht das Zeigerelement der Leistungsanzeigevorrichtung auf Maximalleistung an diesem Leistungsskalenende und zeigt hierdurch an, dass die Maximalleistung abgerufen wird. Währenddessen läuft die Zeit für das Abrufen der Maximalleistung, das heißt der Zeitanzeiger bewegt sich entlang des Zeitskalenfeldes kontinuierlich oder stufenweise auf das Zeitskalenende zu, wo sich ja bereits wegen der übereinstimmenden Skalenenden das Zeigerelement der Leistungsanzeigevorrichtung befindet.

Trifft der Zeitanzeiger auf das Zeigerelement, weil die maximale Zeitdauer abgelaufen ist, so setzt die Leistungsbegrenzung ein. Dies wird bei der erfindungsgemäßen Vorrichtung dem Fahrer nun in der folgenden Weise angezeigt. Der Zeitanzeiger ist dazu ausgelegt, nach Erreichen der maximalen Zeitdauer nicht etwa am Zeitskalenende stehen zu bleiben, sondern über das Zeitskalenende hinaus aus dem Zeitskalenfeld fortzuschreiten und auf oder neben dem Leistungsskalenfeld die von der Leistungsbegrenzung bewirkte variable Leistungsgrenze anzuzeigen. Mit anderen Worten wird also als optischer Eindruck das Zeigerelement der Leistungsanzeigevorrichtung von dem Zeitanzeiger weggeschoben, also weg von dem Leistungsskalenende, das heißt weg von der Maximalleistung. Der Zeitanzeiger hat also eine Doppelfunktion inne, indem er einmal den verstrichenen Anteil der maximalen Zeitdauer und nach Ablauf der maximalen Zeitdauer die aktuell gültige Leistungsgrenze anzeigt.

Die Erfindungsgemäße Anzeigevorrichtung ist in vorteilhafter Weise sehr kompakt realisierbar. Die dritte anzuzeigende Information, nämlich die momentan gültige Leistungsgrenze, wird durch ein Wechselwirken der beiden anderen Anzeigen bewirkt, indem nämlich der Zeitanzeiger der Zeitanzeigevorrichtung hinüberschreitet oder hinüberschwenkt oder übergreift auf das Leistungsskalenfeld der Leistungsanzeigevorrichtung. Es muss hierdurch also in vorteilhafter Weise keine eigene Anzeige für die momentan gültige Leistungsgrenze vorgesehen werden.

Während der Leistungsbegrenzung kann sich der Zeitanzeiger beispielsweise als Bargraph parallel zum Leistungsskalenfeld entlang desselben erstrecken, so dass das Ende des leuchtenden Anteils des Bargraphen auf dem Leistungsskalenfeld den momentan gültigen Wert für die Leistungsgrenze anzeigt. Bevorzugt ist aber auch vorgesehen, dass nach Erreichen der maximalen Zeitdauer der Zeitanzeiger in das Leistungsskalenfeld hinein fortschreitet, sich also beispielsweise der Bargraph in dem Leistungsskalenfeld entlang erstreckt und so auf dem Leistungsskalenfeld ein durch die Leistungsgrenze vorgegebenes momentanes Skalenende bildet. Mit anderen Worten kann das Zeigerelement der Leistungsanzeigevorrichtung, welches die momentan bereitgestellte oder abgerufene Antriebsleistung anzeigt, nur zwischen beispielsweise 0 Prozent und dem momentanen Skalenende, wie es durch den Zeitanzeiger gebildet ist, bewegt werden. Hierdurch ergibt sich der Vorteil, dass der Zeitanzeiger als zusätzliche Funktion ein Anschlagelement für das Zeigerelement der Leistungsanzeigevorrichtung bildet. Als weiterer Vorteil zeigt der Zeitanzeiger in dem Leistungsskalenfeld die Leistungsgrenze in genau derselben Art und Weise an, wie das Zeigerelement der Leistungsanzeigevorrichtung selbst die momentan bereitgestellte Antriebsleistung.

Besonders bevorzugt ist, dass das Leistungsskalenfeld und das Zeitskalenfeld gegenläufig ausgerichtet sind. Mit anderen Worten ist ein vorgegebener Bewegungspfad des Zeigerelements der Leistungsanzeigevorrichtung einerseits und ein entsprechender Bewegungspfad des Zeitanzeigers derart ausgerichtet, dass sie eine durchgehende, stetig differenzierbare Linie bilden, also beispielsweise entlang einer gemeinsamen geraden Linie verlaufen oder entlang eines Kreisbogensegments. Hierdurch ergibt sich der Vorteil, dass der Zeitanzeiger beim Übergang zur Leistungsbegrenzung beziehungsweise beim Abschalten der Leistungsbegrenzung kontinuierlich übergeht von der Zeitanzeige hin zur Anzeige der Leistungsgrenze.

Besonders bevorzugt ist, dass der Zeitanzeiger als selbstleuchtender Bargraph ausgestaltet ist, bei welchem eine lichtemitierende Leuchtfläche umso größer ist, je größer der verstrichene Anteil der maximalen Zeitdauer ist. Mit anderen Worten wird der selbstleuchtende Anteil des Bargraphen umso leuchtstärker und damit für den Fahrer augenscheinlicher, je weniger Zeit ihm zum Abrufen der Maximalleistung verbleibt. Genauso wird der selbstleuchtende Bargraph um so länger, je kleiner der Wert der Leistungsgrenze ist, je weiter also der Bargraph über das Zeitskalenfeld hinaus in das Leistungsskalenfeld hinein verlängert wird oder neben dem Leistungsskalenfeld entlang verläuft. Wie bereits ausgeführt, kann hierbei die Leuchtfläche des Bargraphen segmentiert oder geschlossenflächig ausgestaltet sein.

Die Anzeigevorrichtung kann mit einem mechanischen Zeiger als Zeigerelement der Leistungsanzeigevorrichtung ausgestaltet sein. Es kann auch vorgesehen sein, dass sowohl die Leistungsanzeigevorrichtung als auch die Zeitanzeigevorrichtung als digitale, auf einem Bildschirm dargestellte grafische Elemente realisiert sind. Hierbei kann die Anzeigevorrichtung als Kombiinstrument oder als Bestandteil eines Infotainmentsystems ausgestaltet sein.

Zu der Erfindung gehört auch ein Kraftfahrzeug. Dieses ist bevorzugt als reines Elektrofahrzeug, das heißt ohne Verbrennungsmotor, ausgestaltet. Das erfindungsgemäße Kraftfahrzeug kann aber auch als Hybridfahrzeug bereitgestellt sein. Das erfindungsgemäße Kraftfahrzeug zeichnet sich durch die erfindungsgemäße Anzeigevorrichtung aus. Das erfindungsgemäße Kraftfahrzeug ist bevorzugt als Kraftwagen, insbesondere als Personenkraftwagen, ausgestaltet.

Die erfindungsgemäße Anzeigevorrichtung muss aber nicht ausschließlich als Bestandteil des Kraftfahrzeugs selbst, also beispielsweise als Kombiinstrument oder als Bestandteil eines Infotainmentsystems bereitgestellt sein. Die Erfindung kann auch in einem Kraftfahrzeug durch beispielsweise ein Smartphone, ein Tablet-PC, ein Notebook oder einen Personalcomputer realisiert werden. Allgemein kann also vorgesehen sein, die Anzeigevorrichtung mittels eines portablen Kommunikationsgeräts umzusetzen. Hierzu ist durch die Erfindung ein Datenträger bereitgestellt, mittels welchem ein herkömmliches portables Kommunikationsgerät dazu ertüchtigt wird, das folgende, ebenfalls ein Bestandteil der Erfindung bildende Verfahren durchzuführen. Mittels des Verfahrens wird in der beschriebenen Weise eine momentan von dem Fahrantrieb eines Kraftfahrzeugs bereitgestellte Antriebsleistung auf einem Leistungsskalenfeld mittels eines Zeigerelements angezeigt und mittels eines Zeitanzeigers ein bereits verstrichener Anteil der maximalen Zeitdauer für das Abrufen der Maximalleistung auf einem Zeitskalenfeld angezeigt. Hierbei schreitet der Zeitanzeiger nach Erreichen der maximalen Zeitdauer über das Zeitskalenfeld hinaus aus dem Zeitskalenfeld fort, das heißt er verlässt das Zeitskalenfeld und zeigt auf dem Leistungsskalenfeld eine von der Leistungsbegrenzung bewirkte Leistungsgrenze an. Dieses erfindungsgemäße Verfahren kann im Rahmen der Erfindung auch derart weitergebildet werden, wie es bereits im Zusammenhang mit den Weiterbildungen der erfindungsgemäßen Anzeigevorrichtung beschrieben worden ist.

Der erwähnte Programmcode für den erfindungsgemäßen Datenträger ist nun dazu ausgelegt, bei Ausführen des Programmcodes durch eine Prozessoreinrichtung eines portablen Kommunikationsgeräts dieses Verfahren durchzuführen. Hierdurch ergibt sich auf dem Kommunikationsgerät, also beispielsweise auf dessen Bildschirm, die Anzeige eines Powermeters und einer Zeitanzeigevorrichtung, die derart zusammenwirken, dass der Zeitanzeiger nach Ablaufen der maximalen Zeitdauer automatisch zum Anzeiger für die momentan gültige Leistungsgrenze wird. Der Programmcode kann auch in der Weise ausgestaltet sein, dass mit ihm ein Kombiinstrument oder ein Infotainmentsystem in derselben Weise betrieben werden.

Um das erfindungsgemäße Verfahren auch in einem portablen Kommunikationsgerät durchführen zu können, sieht eine Weiterbildung des Verfahrens vor, dass die jeweiligen Werte für die momentan von dem Fahrantrieb bereitgestellte Antriebsleistung, des verstrichenen Anteils der maximalen Zeitdauer und der Leistungsbegrenzung über eine OBD-Schnittstelle (OBD - On Bord Diagnosis) durch die Anzeigevorrichtung aus dem Kraftfahrzeug empfangen werden. Dann kann in vorteilhafter Weise die Messung dieser Werte durch das Kraftfahrzeug selbst in der aus dem Stand der Technik bekannten Weise vorgenommen werden.

Schließlich gehört zu der Erfindung auch ein portables Kommunikationsgerät, welches eine Ausführungsform der erfindungsgemäßen Vorrichtung aufweist. Dieses portable Kommunikationsgerät kann also der Fahrer mit in sein Kraftfahrzeug nehmen und bekommt dann während der Fahrt eine Anzeige durch die erfindungsgemäße Anzeigevorrichtung bereitgestellt.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs mit einer Ausführungsform der erfindungsgemäßen Anzeigevorrichtung,
- Fig. 2 bis Fig. 12: jeweils eine schematische Darstellung einer Anzeige, die durch die Anzeigevorrichtung des Kraftwagens von Fig. 1 erzeugt werden kann, und
- Fig. 13: eine schematische Darstellung einer Abfolge von unterschiedlichen Anzeigen, die durch eine Anzeigevorrichtung gemäß einer weiteren Ausführungsform der Erfindung erzeugt werden kann.

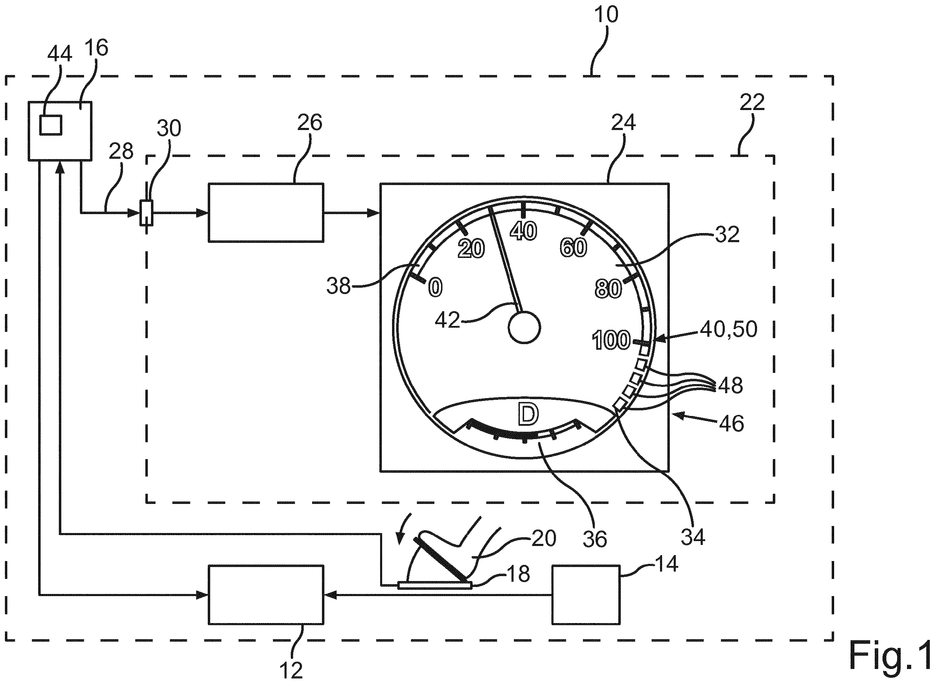

In Fig. 1 ist ein Kraftfahrzeug 10 gezeigt, bei welchem es sich beispielsweise um einen Kraftwagen, wie beispielsweise einen Personenkraftwagen, handeln kann. Das Kraftfahrzeug 10 kann ein Hybridfahrzeug mit einer Verbrennungskraftmaschine und einem elektrischen Fahrantrieb 12 sein oder auch ein rein elektrisch angetriebenes Fahrzeug, das ausschließlich den elektrischen Fahrantrieb 12 aufweist. Der elektrische Fahrantrieb 12 kann beispielsweise einen oder mehrere Elektromotoren umfassen. Mit dem Fahrantrieb 12 können (nicht dargestellte) Räder des Kraftfahrzeugs 10 angetrieben werden. Eine elektrische Leistungsversorgung zum Versorgen des Fahrantriebs 12 mit elektrischer Leistung kann beispielsweise durch eine Traktionsbatterie 14 bereitgestellt sein. Eine von dem Fahrantrieb 12 an den Rädern bereitgestellte Antriebsleistung kann beispielsweise durch ein Steuergerät 16 in an sich bekannter Weise gesteuert oder geregelt werden. Das Steuergerät 16 stellt dabei die Antriebsleistung unter anderem in Abhängigkeit von beispielsweise einer Pedalstellung eines Gaspedals 18 ein, das ein Fahrer mit seinem Fuß 20 betätigen kann.

Um den Fahrer über die aktuell oder momentan bereitgestellte Antriebsleistung zu informieren, kann in dem Kraftfahrzeug 10 eine Anzeigevorrichtung 22 bereitgestellt sein. Die Anzeigevorrichtung 22 kann beispielsweise als ein Kombiinstrument des Kraftfahrzeugs 10 oder als ein Bestandteil eines Infotainmentsystems des Kraftfahrzeugs 10 ausgestaltet sein. Die Anzeigevorrichtung 22 kann aber auch beispielsweise durch ein portables Kommunikationsgerät, wie beispielsweise ein Smartphone oder ein Tablet-PC, in dem Kraftfahrzeug temporär bereitgestellt sein. Die Anzeigevorrichtung 22 weist eine Anzeigeeinheit 24 und eine Steuereinheit 26 für die Anzeigeeinheit 24 auf. Die Steuereinheit 26 kann beispielsweise einen Microcontroller oder eine andere Prozessoreinrichtung sowie ein darauf ausgeführtes Programmmodul umfassen. Die Steuereinheit 26 kann über eine Kommunikationsverbindung 28 von beispielsweise dem Steuergerät 16 einen Wert für die aktuelle Antriebsleistung empfangen. Die Kommunikationsverbindung 28 kann beispielsweise durch einen Kommunikationsbus, wie beispielsweise einen CAN-Bus (CAN - Controller Area Network) realisiert sein. Die Anzeigevorrichtung 22 empfängt die Daten des Steuergeräts 16 beispielsweise an einer Anschlussschnittstelle 30. Falls die Anzeigevorrichtung 22 durch ein portables Kommunikationsgerät bereitgestellt ist, kann die Anschlussschnittstelle 30 beispielsweise als OBD-Schnittstelle ausgestaltet sein. Die Steuereinheit 26 zeigt die empfangenen Daten mittels der Anzeigeeinheit 24 dem Fahrer an.

Die Anzeigeeinheit 24 kann hierzu eine Leistungsanzeigeeinrichtung 32 und eine Zeitanzeigevorrichtung 34 aufweisen. Des Weiteren kann eine Ladestatusanzeige 36 bereitgestellt sein, die einen Ladestatus der Traktionsbatterie 14 anzeigt. In dem gezeigten Beispiel beträgt der Ladestatus beispielhaft circa 60 Prozent. In dem in Fig. 1 gezeigten Beispiel weist die Anzeigevorrichtung 22 des Weiteren eine Anzeige für den momentan eingelegten Gang eines Getriebes auf, wobei hier gerade der Gang "D" für ein Automatikgetriebe eingelegt ist.

Die Anzeigeeinheit 24 kann als teildigitale Anzeige mit mechanischen und digitalen Anzeigen oder auch als Volldigitalanzeige, beispielsweise als ein Bildschirm, ausgestaltet sein.

Die Leistungsanzeigevorrichtung 32 kann ein Leistungsskalenfeld 38 aufweisen, das in dem in Fig. 1 gezeigten Beispiel beispielhaft die Antriebsleistung bezogen auf eine Maximalleistung, die von dem Fahrantrieb 12 bei voller elektrischer Leistungsversorgung, erbracht werden kann. Die Angaben sind hier in Prozent und reichen hier von 0 Prozent (keine Antriebsleistung) bis 100 Prozent (Maximalleistung). Die Angabe für 100 Prozent ist an einem Skalenende 40 des Leistungsskalenfelds 38 angeordnet. Die aktuell von dem Fahrantrieb 12 erbrachte Fahrleistung kann auf dem Leistungsskalenfeld 38 durch ein Zeigerelement 42 angezeigt werden, das beispielsweise als ein mechanischer Zeiger oder ein grafisches Anzeigeelement ausgestaltet sein kann.

Bei dem Kraftfahrzeug 10 ist vorgesehen, die Zeit, für welche der Fahrer mit dem Fahrantrieb 12 die volle Antriebsleistung, das heißt die Maximalleistung, erzeugen kann, zeitlich zu begrenzen und danach zunächst durch eine Leistungsbegrenzung 44 die Fahrleistung, die der Fahrantrieb 12 bei voll durchgetretenem Gaspedal 18 erbringt, steuerungstechnisch zu begrenzen. Die Leistungsbegrenzung 44 kann hierzu beispielsweise in dem Steuergerät 16 als ein Steuer-Programmmodul realisiert sein. Sobald der Fahrantrieb 12 die Maximalleistung erbringt, beginnt ein Zeitzähler zu laufen, welcher den verstrichenen Anteil der maximalen Zeitdauer misst, für welchen der Fahrantrieb 12 in seinem aktuellen Betriebszustand die Maximalleistung noch erbringen darf, bevor die Leistungsbegrenzung 44 die Antriebsleistung auf ein Intervall zwischen 0 Prozent und einer Leistungsgrenze begrenzt, die kleiner als die Maximalleistung ist. Die gemessene, verstrichene Zeit kann durch die Zeitanzeigevorrichtung 34 ebenfalls auf der Anzeigeeinheit 24 ebenfalls durch die Steuereinheit 26 dargestellt werden. Ein Zeitskalenfeld 46 der Zeitanzeigeeinrichtung 34 kann hierzu beispielsweise mehrere Segmente 48 aufweisen, die mit zunehmender verstrichener Zeit nacheinander aufleuchten. Das letzte Segment, das bei Erreichen der maximalen Zeitdauer aufleuchtet, liegt an demjenigen Zeitskalenende 50, an dem auch das Leistungsskalenende 40 liegt. Mit anderen Worten grenzen das Leistungsskalenfeld 38 und das Zeitskalenfeld 46 derart aneinander, dass das Leistungsskalenende 40 und das Zeitskalenende 50 am selben Ort auf der Anzeigevorrichtung 22 angeordnet sind. Die Segmente 48 bilden also einen Zeitanzeiger in Form eines segmentierten Bargraphen. Der segmentierte Bargraph oder auch ein kontinuierlicher Bargraph kann als mechanisches Anzeigeelement oder als digitales, grafisches Anzeigeelement ausgestaltet sein.

Im Folgenden wird anhand von Fig. 1 bis Fig. 12 beispielhaft ein Betrieb des Kraftwagens 10 und insbesondere der Anzeigevorrichtung 22 erläutert. In Fig. 1 ist gezeigt, dass der Fahrer beispielsweise mittels des Gaspedals 18 eine Antriebsleistung von 30 Prozent einstellt und der Betriebszustand des Fahrantriebs 12 es zulässt, für die volle maximale Zeitdauer, z. B. 30 sec oder 60 sec, die Maximalleistung (100 Prozent) abzurufen.

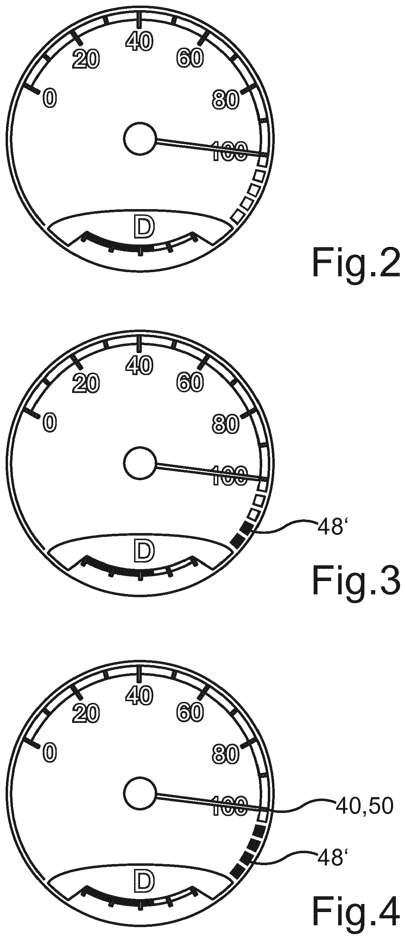

Der Fahrer betätigt nun beispielsweise das Gaspedal 18 und gibt Vollgas. In Fig. 2 ist angezeigt, dass nun der Fahrantrieb 12 die Maximalleistung als Antriebsleistung erzeugt. Das Kraftfahrzeug 10 vollführt eine Fahrt bei 100 Prozent Leistungsverfügbarkeit und maximalem Leistungsabruf. Dies muss aber nach einiger Zeit zum Beispiel wegen des Erhitzens des Fahrantriebs 12 beschränkt werden, das heißt die Leistungsverfügbarkeit muss verringert werden. Der hohe Leistungsabruf ist deshalb zeitlich auf eine maximale Zeitdauer begrenzt, danach muss der Fahrantrieb 12 zunächst wieder beispielsweise abkühlen. Wie viel von der maximalen Zeitdauer bereits an Zeit verstrichen ist, wird beispielsweise durch das Steuergerät 16 überwacht und der verstrichene Anteil an der maximalen Zeitdauer kann ebenfalls über die Kommunikationsverbindung 28 an die Anzeigevorrichtung 22 übermittelt werden. Die Steuereinheit 26 kann dann mittels der Zeitanzeigevorrichtung 34 den verstrichenen Anteil als aktiv leuchtenden Bargraphen 48' anzeigen, wie dies in Fig. 3 veranschaulicht ist. Der aktiv leuchtende Bargraph 48' bewegt sich während des Leistungsabrufs von 100 Prozent und bei Leistungsverfügbarkeit von 100 Prozent beziehungsweise bei inaktiver Leistungsbegrenzung 44 auf die 100 Prozent-Marke zu, das heißt auf das Zeitskalenende 50. Mit "bewegen" ist hierbei gemeint, dass die Länge des aktiv leuchtenden Teils, also des Bargraphen 48', immer länger wird und eine Grenze des aktiv leuchtenden Teils zum noch nicht leuchtenden Teil des Bargraphen sich in Richtung des Zeitskalenendes 50 im gezeigten Beispiel stufenweise nähert. Mit selbstleuchtendem Anteil 48' ist ein Anteil des Bargraphen gemeint, der heller leuchtet als der übrige Anteil. Der übrige Anteil kann beispielsweise als dunkelgrauer Balken angedeutet sein oder aber auch vollständig unbeleuchtet sein.

Ruft der Fahrer weiterhin die Maximalleistung des Fahrantriebs 12 ab, so nähert sich, wie in Fig. 4 gezeigt, der Bargraph 48' mit fortschreitender Zeit also immer mehr dem Zeitskalenende 50 an. In Fig. 4 ist gezeigt, dass der Fahrer zwar immer noch 100 Prozent Leistungsabruf bei 100 Prozent Leistungsverfügbarkeit zur Verfügung hat, nun aber der Fahrantrieb 12 für die maximale Zeitdauer die Maximalleistung erbracht hat. Der Bargraph 48', das heißt der Zeitanzeiger 46, hat nun das Zeitskalenende 50 erreicht.

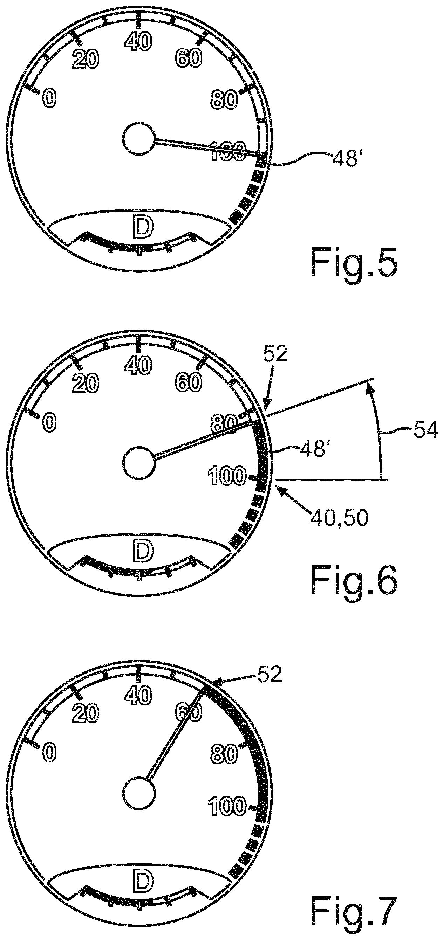

Weil die maximale Zeitdauer abgelaufen ist, wird nun die Leistungsbegrenzung 44 aktiv und setzt eine Leistungsgrenze 52 für den Fahrantrieb 12 fest, die die vom Fahrantrieb 12 erbringbare Antriebsleistung nach oben hin begrenzt (Fig. 5). Auch die Leistungsgrenze 52 kann durch die Anzeigevorrichtung 22 dargestellt werden. Hierzu kann beispielsweise das Steuergerät 16 die aktuelle Leistungsgrenze über die Kommunikationsverbindung 28 an die Anzeigevorrichtung 22 übertragen. Die Steuereinheit 26 zeigt dann mittels des Zeitanzeigers 46 die Leistungsgrenze 52 an. Der Zeitanzeiger 46 wird dabei in der Weise betrieben, dass der aktiv leuchtende Bargraph 48' über das Zeitskalenende 50 hinaus in das Leistungsskalenfeld 38 hinein verlängert wird und hierdurch eine variable Obergrenze, nämlich die Leistungsgrenze 52, für das Leistungsskalenfeld 38 bildet. Da der Fahrer in dem Beispiel immer noch Vollgas gibt, hierbei aber die Leistungsbegrenzung 44 aktiv ist, erbringt der Fahrantrieb 12 eine Antriebsleistung, die der Leistungsgrenze 52 entspricht (siehe Fig. 6). In Fig. 6 ist veranschaulicht, dass die Leistungsgrenze 52 ausgehend von dem Leistungsskalenende 40 als negative Leistung 54 mittels des Zeitanzeigers 46 dargestellt wird.

Der Fahrer gibt weiterhin Vollgas, das heißt es herrscht 100 Prozent Leistungsabruf bei einer maximalen Leistung, die durch die Leistungsgrenze 52 festgelegt wird. In Fig. 7 ist aufgrund beispielsweise der weiteren Erwärmung des Fahrantriebs 12 die Leistungsgrenze 52 auf beispielsweise 60 Prozent festgelegt.

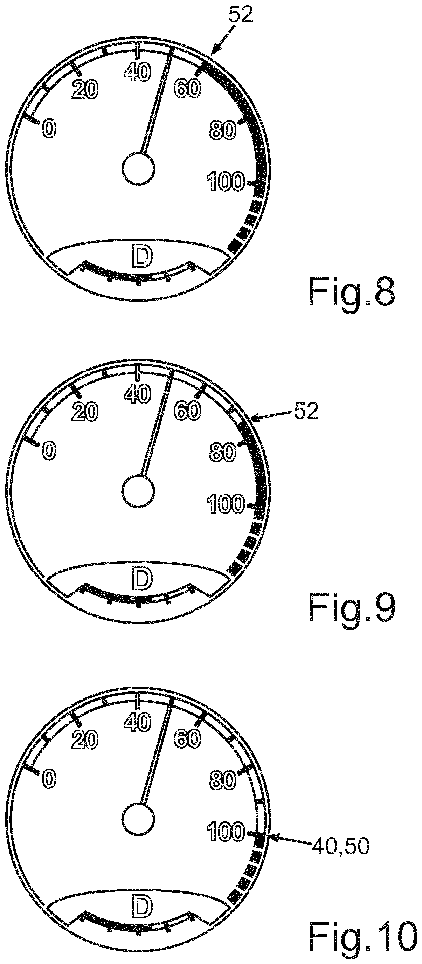

Der Fahrer geht nun vom Gas, das heißt die vom Fahrantrieb 12 erbrachte Antriebsleistung ist kleiner als die maximal abrufbare Leistung, die durch die Leistungsgrenze 52 festgelegt ist (siehe Fig. 8). Hierdurch ergibt sich für den Fahrantrieb 12 die Möglichkeit, sich abzukühlen. Die Leistungsgrenze 52 wird deshalb wieder auf einen höheren Wert eingestellt, beispielsweise 75 Prozent (siehe Fig. 9). Durch Erholung des Fahrantriebs 12 steigt die maximale Leistungsfähigkeit, das heißt die Leistungsgrenze 52, weiter. In Fig. 10 ist gezeigt, dass der Fahrer weiterhin einen Leistungsabruf von 50 Prozent der Maximalleistung vornimmt und durch Erholung des Fahrantriebs 12 die Leistungsgrenze 42 weiter gestiegen ist, und zwar auf die Maximalleistung. Somit kann die Leistungsbegrenzung 44 deaktiviert werden. Allerdings ist die Fahrbereitschaft des Fahrantriebs 12 noch nicht wieder soweit hergestellt, dass die Maximalleistung für eine längere Zeit abrufbar wäre.

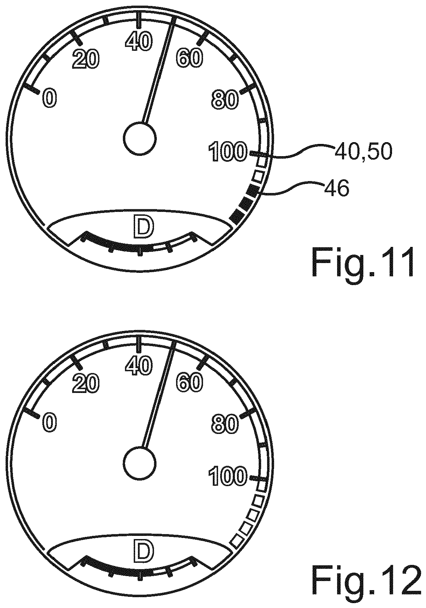

Der Fahrer bleibt weiterhin bei einem Leistungsabruf von 50 Prozent der Maximalleistung (Fig. 11). Deshalb regeneriert der Fahrantrieb 12 weiter und die Zeit, für welche die Maximalleistung abgerufen werden kann, steigt. Mit anderen Worten ist der Anteil der bereits von der maximalen Zeitdauer verbrauchten Zeit gesunken. 100 Prozent Antriebsleistung, das heißt die Maximalleistung, kann jetzt über einen längeren Zeitraum abgerufen werden. Entsprechend zeigt der Zeitanzeiger 46 nun einen Zeitanteil an, der kleiner als die maximale Zeitdauer (Zeitskalenende 50) ist.

In Fig. 12 ist gezeigt, wie sich der Fahrantrieb 12 vollständig erholt hat und dem Fahrer nun wieder für die maximale Zeitdauer die Maximalleistung des Fahrantriebs zur Verfügung stellt. Die Zeitanzeigevorrichtung 34 zeigt nun keinen selbstleuchtenden Anteil mehr an.

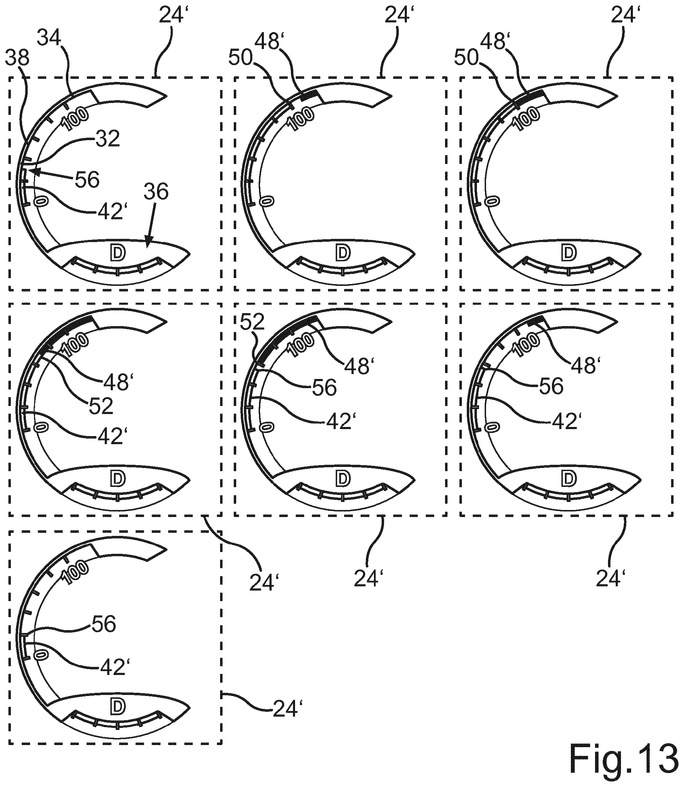

In Fig. 13 ist entsprechend des Ablaufs, wie er in Fig. 2 bis Fig. 12 gezeigt ist, für eine Anzeigeeinheit 24' dargestellt. Die Anzeigeeinheit 24' kann durch eine Steuereinheit gesteuert werden, die funktional in der gleichen Weise wie die Steuereinheit 26 ausgestaltet sein kann.

Die Anzeigeeinheit 24' kann beispielsweise eine Leistungsanzeigevorrichtung 32, eine Zeitanzeigevorrichtung 34 und optional eine Ladestatusanzeige 36 aufweisen. Anstelle des Zeigerelements 42 kann bei der Anzeigeeinheit 24' ein selbstleuchtender Bargraph 42' vorgesehen sein, der heller leuchtet als ein verbleibender Anteil des Leistungsskalenfelds 38 der Leistungsanzeigevorrichtung 34. Eine Leuchtgrenze 56 des Bargraphen 42' zeigt dann die aktuelle Antriebsleistung an, die von dem Fahrantrieb 12 erbracht wird. In Fig. 13 ist von links nach rechts und von oben nach unten folgende Abfolge von Betriebszuständen dargestellt. In der ersten Darstellung ruft der Fahrer 30 Prozent der Maximalleistung des Fahrantriebs 12 ab und es steht für die maximale Zeitdauer die Maximalleistung bei Bedarf zur Verfügung. Der Fahrer ruft dann die Maximalleistung ab und es beginnt der Zeitzähler für den verstrichenen Anteil der maximalen Zeitdauer zu laufen, was bei der Anzeigeeinheit 24' wieder als ein weiterer Bargraph 48' als Zeitanzeiger erfolgt, welcher bei fortschreitendem Zeitverbrauch zum Zeitskalenende 50 hin fortschreitet. Sobald die maximale Zeitdauer abgelaufen ist, hat der Bargraph 48' das Zeitskalenende 50 erreicht. Nun wird die Leistungsbegrenzung 44 aktiv. Die Leistungsgrenze 52, die gerade eingestellt ist, wird durch den Bargraph 48', das heißt den Zeitanzeiger, innerhalb des Leistungsskalenfelds 38 angezeigt, das heißt der Bargraph 48' verdrängt den Bargraphen 42' und bildet so ein Anschlagelement. Der Fahrer reduziert dann die abgerufene Antriebsleistung auf beispielsweise 50 Prozent, während die Leistungsgrenze weiterhin bei 60 Prozent ist. Nun kann der Fahrantrieb 12 sich beispielsweise abkühlen. Die Leistungsgrenze 52 wird deshalb durch die Leistungsbegrenzung 44 auf einen Wert von zunächst 90 Prozent angehoben. Der Fahrer ruft weiterhin weniger als die maximal verfügbare Leistung, das heißt weniger als die Leistungsgrenze, ab, so dass der Fahrantrieb 12 weiter abkühlt und schließlich auch wieder die maximale Zeitdauer für den Abruf der Maximalleistung zur Verfügung steht (letzte Darstellung links unten).

Durch das Beispiel ist gezeigt, wie eine direkte Anzeige der Leistungsbegrenzung in Relation zur maximal abrufbaren und abgerufenen Leistung realisiert werden kann. Es steht hierzu eine Leistungsanzeigevorrichtung oder Powermeter mit negativer Leistungsangabe 54 in der Leistungsbegrenzungsanzeige bereit. Die erfindungsgemäße Anzeigevorrichtung bietet hierdurch eine Verbesserung der Anzeige und den Übergang zwischen zeitliche Beschränkung der 100-Prozent-Leistungsverfügbarkeit hin zur spürbar abrufbaren Leistungs-Beschränkung unter 100-Prozent-Leistungsverfügbarkeit. Hierzu schreitet der Zeitanzeiger über das Zeitskalenende des Zeitskalenfelds hinaus und zeigt im Leistungsskalenfeld die aktuelle Leistungsgrenze an. Diese Vereinfachung der Anzeige der Leistungsverfügbarkeit und Leistungsbegrenzung und der tatsächlich abgerufenen Leistung in einem Anzeigeinstrument erlaubt es, die drei darzustellenden, den Betriebszustand des Fahrantriebs 12 kennzeichnenden Werte kompakt in der Anzeigevorrichtung 22 darzustellen.

## Patentansprüche

1. Anzeigevorrichtung (22) für ein Kraftfahrzeug (10), das einen elektrischen Fahrantrieb (12) aufweist, bei welchem eine Leistungsbegrenzung (44) die Antriebsleistung des Fahrantriebs (12) auf eine Leistungsgrenze (52) kleiner als eine vorbestimmte Maximalleistung frühestens dann begrenzt, nachdem der Fahrantrieb (12) die Maximalleistung für eine Restzeitdauer bereitgestellt hat, die kleiner als eine vorbestimmte maximale Zeitdauer oder gleich der maximalen Zeitdauer ist,
wobei die Anzeigevorrichtung (22) aufweist:
- eine Leistungsanzeigevorrichtung (32) mit einem Zeigerelement (42, 42') zum Anzeigen einer momentan von dem Fahrantrieb bereitgestellten Antriebsleistung auf einem Leistungsskalenfeld (38), und
- eine Zeitanzeigevorrichtung (34) mit einem Zeitanzeiger (48') zum Darstellen der Restzeitdauer durch Anzeigen eines bereits verstrichenen Anteils der maximalen Zeitdauer auf einem Zeitskalenfeld (46),
wobei
- das Leistungsskalenfeld (38) ein die Maximalleistung repräsentierendes Leistungsskalenende (40) und das Zeitskalenfeld (46) ein die maximale Zeitdauer repräsentierendes Zeitskalenende (50) aufweist und
- das Leistungsskalenende (40) und das Zeitskalenende (50) übereinstimmen und
**dadurch gekennzeichnet, dass**
- der Zeitanzeiger (48') dazu ausgelegt ist, nach Erreichen der maximalen Zeitdauer über das Zeitskalenende (50) hinaus aus dem Zeitskalenfeld (46) fortzuschreiten und dabei auf dem Leistungsskalenfeld (38) eine von der Leistungsbegrenzung (44) bewirkte variable Leistungsgrenze (52) anzuzeigen.

2. Anzeigevorrichtung (22) nach Anspruch 1, wobei der Zeitanzeiger (48') dazu ausgelegt ist, nach Erreichen der maximalen Zeitdauer in das Leistungsskalenfeld (38) hinein fortzuschreiten und auf dem Leistungsskalenfeld (38) ein durch die Leistungsgrenze (52) vorgegebenes momentanes Skalenende (52) zu bilden.

3. Anzeigevorrichtung (22) nach einem der vorhergehenden Ansprüche, wobei der Zeitanzeiger (48') dazu ausgelegt ist, nach Erreichen der maximalen Zeitdauer ein einen Bewegungspfad des Zeigerelements (42, 42') der Leistungsanzeigevorrichtung (32) begrenzendes Anschlagselement zu bilden.

4. Anzeigevorrichtung (22) nach einem der vorhergehenden Ansprüche, wobei das Leistungsskalenfeld (32) und das Zeitskalenfeld (34) gegenläufig ausgerichtet sind.

5. Anzeigevorrichtung (22) nach einem der vorhergehenden Ansprüche, wobei das Zeigerelement (42) der Leistungsanzeigevorrichtung (32) als ein mechanischer Zeiger ausgestaltet ist.

6. Anzeigevorrichtung (22) nach einem der vorhergehenden Ansprüche, wobei der Zeitanzeiger (48') als selbstleuchtender Bargraph ausgestaltet ist, bei welchem eine Licht emittierende Leuchtfläche um so größer ist, je größer der verstrichenen Anteil der maximalen Zeitdauer und/oder je kleiner der Wert der Leistungsgrenze ist.

7. Anzeigevorrichtung (22) nach einem der vorhergehenden Ansprüche, wobei die Anzeigevorrichtung (22) als Kombiinstrument oder als Bestandteil eines Infotainmentsystems ausgestaltet ist.

8. Kraftfahrzeug (10) mit einer Anzeigevorrichtung (22) nach einem der vorhergehenden Ansprüche.

9. Verfahren zum Betreiben einer Anzeigevorrichtung (22) für ein Kraftfahrzeug (10), das einen elektrischen Fahrantrieb (12) aufweist, bei welchem die Antriebsleistung des Fahrantriebs (12) durch eine Leistungsbegrenzung (44) auf eine Leistungsgrenze (52) kleiner als eine vorbestimmte Maximalleistung begrenzt, falls der Fahrantrieb (12) für eine vorbestimmte maximale Zeitdauer die Maximalleistung bereitgestellt hat, mit den Schritten:
- Anzeigen einer momentan von dem Fahrantrieb (12) bereitgestellten Antriebsleistung auf einem Leistungsskalenfeld (38) mit einem Zeigerelement (42, 42'), und
- Anzeigen eines bereits verstrichenen Anteils der maximalen Zeitdauer auf einem Zeitskalenfeld (46) mit einem Zeitanzeiger (48'),
**dadurch gekennzeichnet, dass**
der Zeitanzeiger (48') nach Erreichen der maximalen Zeitdauer über ein Zeitskalenende (50) hinaus aus dem Zeitskalenfeld (46) fortschreitet und auf dem Leistungsskalenfeld (38) eine von der Leistungsbegrenzung (44) bewirkte Leistungsgrenze (52) anzeigt.

10. Verfahren nach Anspruch 9, wobei jeweilige Werte für die momentan von dem Fahrantrieb (12) bereitgestellte Antriebsleistung, des verstrichenen Anteils der maximalen Zeitdauer und der Leistungsbegrenzung (52) über eine OBD-Schnittstelle (30) durch die Anzeigevorrichtung (22) aus dem Kraftfahrzeug (10) empfangen werden.

11. Datenträger mit einem Programmcode, **dadurch gekennzeichnet, dass** der Programmcode dazu ausgelegt ist, bei Ausführen des Programmcodes durch eine Prozessoreinrichtung eines portablen Kommunikationsgeräts oder eines Kombiinstruments oder eines Infotainmentsystems ein Verfahren nach einem der Ansprüche 9 oder 10 durchzuführen.

12. Portables Kommunikationsgerät, **gekennzeichnet durch** eine Anzeigevorrichtung (22) nach einem der Ansprüche 1 bis 7.

## Claims

1. Display device (22) for a motor vehicle (10) which has an electric drive (12), in which a power limitation means (44) limits the drive power of the drive (12) to a power limit (52) which is less than the predetermined maximum power, at the earliest after the drive (12) has made available the maximum power for a residual time period which is shorter than a predetermined maximum time period or equal to the maximum time period, wherein the display device (22) has:
- a power display device (32) with an indicator element (42, 42') for indicating a drive power, which is being currently supplied by the drive, on a power scale field (38), and
- a time display device (34) with a time indicator (48') for displaying the residual time period by displaying an already passed portion of the maximum time period on a timescale field (46), wherein
- the power scale field (38) has a power scale end (40) which represents the maximum power, and the timescale field (46) has a timescale end (50) which represents the maximum time period, and
- the power scale end (40) and the timescale end (50) correspond, and
**characterized in that**
- the time indicator (48') is configured to proceed, after the maximum time period has been reached, beyond the timescale end (50) out of the timescale field (46) and in the process to indicate a variable power limit (52), which is brought about by the power limitation means (44), on the power scale field (38).

2. Display device (22) according to Claim 1, wherein the time indicator (48') is configured to proceed, after the maximum time period has been reached, and to form a current scale end (52), predefined by the power limit (52), on the power scale field (38) .

3. Display device (22) according to one of the preceding claims, wherein the time indicator (48') is configured to form, after the maximum time period has been reached, a stop element which delimits a movement path of the indicator element (42, 42') of the power display device (32).

4. Display device (22) according to one of the preceding claims, wherein the power scale field (32) and the timescale field (34) are oriented in opposite directions.

5. Display device (22) according to one of the preceding claims, wherein the indicator element (42) of the power display device (32) is configured as a mechanical pointer.

6. Display device (22) according to one of the preceding claims, wherein the time indicator (48') is configured as a self-illuminating bar graph, in which a light-emitting illuminated area is larger the greater the portion of the maximum time period which has passed and/or the smaller the value of the power limit.

7. Display device (22) according to one of the preceding claims, wherein the display device (22) is configured as a combination instrument or as part of an infotainment system.

8. Motor vehicle (10) having a display device (22) according to one of the preceding claims.

9. Method for operating a display device (22) for a motor vehicle (10) which has an electric drive (12), in which the drive power of the drive (12) is limited by a power-limiting means (44) to a power limit (52) which is less than a predetermined maximum power if the drive (12) has made available the maximum power for a predetermined maximum time period, comprising the steps:
- displaying a drive power, currently made available by the drive (12) on a power scale field (38) with a indicator element (42, 42'), and
- displaying an already passed portion of the maximum time period on a timescale field (46) with a time indicator (48'),
**characterized in that**
the time indicator (48') progresses, after the maximum time period has been reached, beyond a timescale end (50) out of the timescale field (46) and indicates a power limit (52), brought about by the power-limiting means (44), on the power scale field (38).

10. Method according to Claim 9, wherein respective values for the drive power which is currently made available by the drive (12), of the portion of the maximum time period which has passed and of the power-limiting means (52) are received from the motor vehicle (10) by the display device (22) via an OBD interface (30).

11. Data carrier having a program code, **characterized in that** the program code is configured to carry out a method according to one of Claims 9 and 10 when the program code is executed by a processor device of a portable communication device or of a combination instrument or of an infotainment system.

12. Portable communication device, **characterized by** a display device (22) according to one of Claims 1 to 7.

## Revendications

1. Dispositif d'affichage (22) pour un véhicule automobile (10) à système d'entraînement électrique (12), dans lequel une limitation de puissance (44) limite la puissance d'entraînement du système d'entraînement (12) à une limite de puissance (52) inférieure à une puissance maximale prédéterminée au plus tôt après que le système d'entraînement (12) a fourni la puissance maximale pendant une période de temps restante qui est inférieure à une période de temps maximale prédéterminée ou égale à la période de temps maximale,
dans lequel le dispositif d'affichage (22) comporte :
- un dispositif d'affichage de puissance (32) doté d'un élément indicateur (42, 42') destiné à afficher une puissance d'entraînement actuellement fournie par le système d'entraînement sur un champ d'échelle de puissance (38), et
- un dispositif d'affichage de temps (34) doté d'un indicateur de temps (48') destiné à représenter la période de temps restante par affichage d'une fraction écoulée de la période de temps maximale sur un champ d'échelle de temps (46),
dans lequel
- le champ d'échelle de puissance (38) comporte une fin d'échelle de puissance (40) représentant la puissance maximale et le champ d'échelle de temps (46) comporte une fin d'échelle de temps (50) représentant la période de temps maximale, et
- la fin de l'échelle de puissance (40) et la fin de l'échelle de temps (50) se correspondent, et
**caractérisé en ce que**
- l'indicateur de temps (48') est conçu pour avancer au-delà de la fin de l'échelle de temps (50) en dehors du champ d'échelle de temps (46) après que la période de temps maximale a été atteinte, pour ainsi indiquer sur le champ d'échelle de puissance (38) une limite de puissance variable (52) provoquée par la limitation de puissance (44).

2. Dispositif d'affichage (22) selon la revendication 1, dans lequel l'indicateur de temps (48') est conçu pour avancer dans le champ d'échelle de puissance (38) après que la période de temps maximale a été atteinte et pour former sur le champ d'échelle de puissance (38) une fin d'échelle instantanée (52) prédéfinie par la limite de puissance (52).

3. Dispositif d'affichage (22) selon l'une des revendications précédentes, dans lequel l'indicateur de temps (48') est conçu pour former un élément de butée limitant un trajet de déplacement de l'élément indicateur (42, 42') du dispositif d'affichage de puissance (32) après que la période de temps maximale a été atteinte.

4. Dispositif d'affichage (22) selon l'une des revendications précédentes, dans lequel le champ d'échelle de puissance (32) et le champ d'échelle de temps (34) sont orientés en sens opposé.

5. Dispositif d'affichage (22) selon l'une des revendications précédentes, dans lequel l'élément indicateur (42) du dispositif d'affichage de puissance (32) est réalisé sous la forme d'un indicateur mécanique.

6. Dispositif d'affichage (22) selon l'une des revendications précédentes, dans lequel l'indicateur de temps (48') est réalisé sous la forme d'un graphique à barres auto-éclairé, dans lequel une surface éclairante émettrice de lumière est d'autant plus grande que la fraction écoulée de la période de temps maximale est grande et/ou est d'autant plus faible que la valeur de la limite de puissance est faible.

7. Dispositif d'affichage (22) selon l'une des revendications précédentes, dans lequel le dispositif d'affichage (22) est réalisé sous la forme d'un instrument combiné ou sous la forme d'un élément d'un système d'info-divertissement.

8. Véhicule automobile (10) doté d'un dispositif d'affichage (22) selon l'une des revendications précédentes.

9. Procédé de mise en oeuvre d'un dispositif d'affichage (22) pour un véhicule automobile (10) à système d'entraînement électrique (12), dans lequel la puissance d'entraînement du système d'entraînement (12) est limitée par une limitation de puissance (44) à une limite de puissance (52) inférieure à une puissance maximale prédéterminée dans le cas où le système d'entraînement (12) a fourni la puissance maximale pendant une période de temps maximale prédéterminée, comprenant les étapes suivantes :
- afficher une puissance d'entraînement actuellement fournie par le système d'entraînement (12) sur un champ d'échelle de puissance (38) doté d'un élément indicateur (42, 42'), et
- afficher une fraction écoulée de la période de temps maximale sur un champ d'échelle de temps (46) doté d'un indicateur de temps (48'),
**caractérisé en ce que**
l'indicateur de temps (48') avance au-delà d'une fin d'échelle de temps (50) en dehors du champ d'échelle de temps (46) après que la période de temps maximale a été atteinte et indique sur le champ d'échelle de puissance (38) une limite de puissance (52) provoquée par la limitation de puissance (44).

10. Procédé selon la revendication 9, dans lequel des valeurs respectives de la puissance d'entraînement actuellement fournie par le système d'entraînement (12), de la fraction écoulée de la période de temps maximale et de la limitation de puissance (52) sont reçues en provenance du véhicule automobile (10) par le dispositif d'affichage (22) par l'intermédiaire d'une interface OBD (30).

11. Support de données comportant un code de programme, **caractérisé en ce que** le code de programme est conçu pour mettre en oeuvre un procédé selon l'une des revendications 9 ou 10 lorsque le code de programme est exécuté par un dispositif à processeur d'un appareil de communication portable ou d'un instrument combiné ou d'un système d'info-divertissement.

12. Appareil de communication portable, **caractérisé par** un dispositif d'affichage (22) selon l'une des revendications 1 à 7.
